# EUROPÄISCHE PATENTSCHRIFT

(11) **EP 1 834 907 B1**
(45) Veröffentlichungstag und Bekanntmachung des Hinweises auf die Patenterteilung: **11.02.2009**
(21) Anmeldenummer: 07004114.0
(22) Anmeldetag: 28.02.2007
(51) Int. Cl.: B65G 57/28

(54) **Stapelvorrichtung für Transportpaletten**
Stacking device for transport pallets
Dispositif d'empilement pour palettes de transport

(30) Priorität: 15.03.2006 DE 102006011851
(43) Veröffentlichungstag der Anmeldung: 19.09.2007
(73) Patentinhaber: NEDCON MAGAZIJNINRICHTING B.V., 7005 BJ Doetinchem (NL)
(72) Erfinder: de Jong, Leen-Pieter, 7051 GN Varsseveld (NL)
(74) Vertreter: Christophersen, Ulrich Rudolf

(56) Entgegenhaltungen:
- EP-A1- 1 557 382
- US-A- 5 755 816
- US-B2- 6 817 828

## Beschreibung

Die vorliegende Erfindung betrifft eine Vorrichtung zum Stapeln leerer Transportpaletten mit einer in einem Gestell drehbar gelagerten Palettenaufnahme, die zwischen einer Belade- und einer Entnahmestellung verschwenkbar ist, und mit aktiven und passiven Verriegelungselementen zur lösbaren Verriegelung der Palettenaufnahme in der Belade- und der Entnahmestellung, wobei das aktive, zum Lösen der Verriegelung betätigbare Verriegelungselement an der drehbaren Palettenaufnahme angeordnet und gemeinsam mit dieser verschwenkbar ist, und das passive Verriegelungselement drehfest gegenüber dem Gestell ist und eine erste und eine zweite Verriegelungsstruktur aufweist.

In der Lager- und Kommissioniertechnik wird sehr häufig mit Transportpaletten als Lagerhilfsmittel für nahezu alle Arten von Waren bzw. Warengebinden gearbeitet. Besonders verbreitet sind z. B. die standardisierten Euro-Paletten. Nach Entleerung der Transportpaletten werden die leeren Paletten zu Palettenstapeln aufgeschichtet, abtransportiert und erneut mit Waren oder Warengebinden beladen. Fast immer erfolgt das Aufschichten der Paletten zu Palettenstapeln von Hand. Für die Lagerarbeiter ist dies eine schwere körperliche Arbeit, da die Paletten oft ein erhebliches Gewicht aufweisen und es zur Bildung der Palettenstapel erforderlich ist, die einzelne Palette mit ihrem Gewicht zunächst auf die Höhe des bereits gebildeten Stapels anzuheben und sodann dort abzusetzen.

Aus der US 6,817,828 B2 ist eine Vorrichtung zum Stapeln von Paletten bekannt, mit der die schwere körperliche Arbeit der Lagerarbeiter reduziert wird. Die Vorrichtung verfügt über eine aus zwei Schenkeln zusammengesetzte Palettenaufnahme, die zwischen einer Beladestellung und einer Entnahmestellung verschwenkbar ist. In der Beladestellung kann ein Lagerarbeiter die Paletten mit vergleichsweise geringem Kraftaufwand seitlich in die Palettenaufnahme hinein befördern. Anschließend wird die Palettenaufnahme einschließlich der darin gesammelten Paletten in die Entnahmeposition verschwenkt, in welcher die zu einem Stapel geschichteten Paletten über ein Lagerbediengerät entnommen werden.

Sowohl beim Beladen als auch beim Entladen der Palettenaufnahme ist es erforderlich, diese gegenüber ungewollten Schwenkbewegungen zu verriegeln. Die bekannte Vorrichtung verfügt dazu über zwei Verriegelungsmechanismen für einerseits die Belade- andererseits die Entnahmestellung. Der Verriegelungsmechanismus für die Beladestellung ist am beladeseitigen, der für die Entnahmestellung am gegenüberliegenden, entnahmeseitigen Ende der Vorrichtung angeordnet. Beide Verriegelungsmechanismen setzen sich jeweils aus einem gemeinsam mit der Palettenaufnahme verschwenkbaren Verriegelungselement und einem mit diesem korrespondierenden ortsfesten Verriegelungselement zusammen. Als schwenkbares Verriegelungselement dient ein am jeweiligen Schenkel der Palettenaufnahme befestigter Bolzen. Dieser ist durch einen ortsfest angeordneten Klinkenmechanismus verriegelbar. Zum Lösen der Verriegelung ist ein Betätigungshebel vorgesehen. Der Betätigungshebel ist auf der Beladeseite der Vorrichtung in einiger Entfernung zu der Palettenaufnahme angeordnet und weist für die beiden Klinkenmechanismen separate Seilzüge auf, über die die Bewegungen des Betätigungshebels auf die Klinken übertragen und so deren Verriegelung mit den Bolzen gelöst wird, wobei der Seilzug für den entnahmeseitigen Klinkenmechanismus über eine Vielzahl Umlenkrollen mehrfach umgelenkt und so auf die andere Seite der Vorrichtung geführt ist.

Bei einer solchen Vorrichtung hat sich der hohe Konstruktionsaufwand als nachteilig erwiesen. Ein weiterer Nachteil der Vorrichtung nach der US 6,817,828 B2 besteht darin, dass, sobald der Bediener den Betätigungshebel betätigt, die mit dem Palettenstapel gefüllte und ein erhebliches Gesamtgewicht aufweisende Palettenaufnahme von alleine in Richtung der anderen Endstellung zu verschwenken beginnt. Zu diesem Zeitpunkt hat der Bediener mindestens eine Hand am Betätigungshebel, weshalb es ihm nicht möglich ist, den Schwenkvorgang z. B. in Notfallsituationen zu verlangsamen oder zu stoppen.

Aus der US 5,755,816 ist eine gattungsgemäße, in einem Gestell um eine Achse verschwenkbare Aufnahme bekannt. Darin einsetzen lässt sich ein beladener Container, um diesen zum Entladen des Inhalts bis in eine geneigte Stellung verschwenken zu können. Die Aufnahme für den Container weist die Gestalt eines teils offenen und teils geschlossenen Rahmens auf, wobei sich der Container auf einem ersten Schenkel der Aufnahme abstützt, und gegen einen hierzu rechtwinkligen weiteren Schenkel abstützt. Zur Verriegelung der Aufnahme in der Entladestellung ist an der Aufnahme ein aktives, d. h. von Hand betätigbares Verriegelungselement in Gestalt eines verschwenkbaren Hebels angeordnet. Ein an dem Hebel angebrachter Nocken verriegelt von oben her gegen einen gestellfesten Vorsprung und verhindert so ein weiteres Verschwenken der Aufnahme in die Entleerungsrichtung. Gegen ein Verschwenken in die andere Richtung ist an dem Gestell ein Stützrohr mit daran angebrachten Stützkonsolen starr befestigt, auf denen sich die Aufnahme abstützen kann.

Ausgehend von diesem Stand der Technik ist es die **Aufgabe** der Erfindung, eine Vorrichtung zum Stapeln leerer Transportpaletten zu schaffen, die sich durch eine konstruktiv einfache Verriegelung auszeichnet und dem Bediener zugleich die Möglichkeit gibt, z.B. in Notfällen einen bereits eingeleiteten Schwenkvorgang zu verlangsamen oder zu stoppen.

Zur **Lösung** dieser Aufgabe wird bei einer Vorrichtung der eingangs genannten Art erfindungsgemäß vorgeschlagen, dass das passive Verriegelungselement Zwischenverriegelungsstrukturen zwischen der ersten und der zweiten Verriegelungsstruktur aufweist, und dass das aktive Verriegelungselement federbelastet an den Verriegelungsstrukturen und Zwischenverriegelungsstrukturen verriegelbar ist.

Die Anordnung des aktiven, d.h. des betätigbaren Verriegelungselements an der Palettenaufnahme erlaubt eine einfache Bauweise der Vorrichtung. Das Anbringen von etwa Seilzügen oder Umlenkrollen ist nicht erforderlich. Auch kann der Bediener seine Hände beim Lösen der Verriegelung an der Palettenaufnahme behalten und so z.B. die Schwenkbewegung von Hand steuern und gegebenenfalls verlangsamen.

Zwischen der ersten Verriegelungsstruktur und der zweiten Verriegelungsstruktur sind Zwischenverriegelungsstrukturen vorgesehen, die ebenfalls mit dem aktiven Verriegelungselement in Eingriff bringbar sind, wodurch sich die Palettenaufnahme in mehr als nur zwei verschiedenen Positionen verriegeln lässt. Dies ist insbesondere von Vorteil, wenn der Lagerarbeiter die Bewegung der Palettenaufnahme z.B. aufgrund einer Notfallsituation stoppen möchte.

Vorteilhaft ist die von den Verriegelungselementen gebildete Verriegelung über ein mit dem aktiven Verriegelungselement gekoppeltes Betätigungselement lösbar. Der Bediener braucht auf diese Weise die Entriegelung nicht über das aktive Verriegelungselement selbst vorzunehmen, sondern kann dies über ein geeignetes Betätigungselement bewirken, welches sich beispielsweise durch einen verbesserten Griffkomfort, eine bessere Zugänglichkeit usw. auszeichnet.

Eine weitere Ausgestaltung des Betätigungselements sieht im Hinblick auf eine konstruktiv einfach gehaltene Vorrichtung vor, dass das Betätigungselement ein mit dem schwenkbaren, aktiven Verriegelungselement gekoppeltes Griffteil aufweist. Über das Griffteil kann eine Kraft auf das z.B. über ein Zugelement mit diesem gekoppelte Verriegelungselement ausgeübt werden, die die Verriegelung mit dem ortsfesten, passiven Verriegelungselement z.B. entgegen der Kraft einer Druckfeder löst. Ein solches Griffteil verbessert den Bedienungskomfort der Vorrichtung.

In diesem Zusammenhang ist es für den Bedienkomfort weiter vorteilhaft, wenn das Griffteil gemeinsam mit einer Querstange greifbar ist, die starr an der Palettenaufnahme befestigt ist und wenn darüber hinaus das Griffteil unter Fingerdruck gegen die Querstange ziehbar ist. Hierdurch ergibt sich eine insgesamt einfache Handhabung der Vorrichtung, bei der das Betätigungselement ähnlich einer Fahrradbremse betätigbar ist.

Für eine einfache Handhabung ist es von Vorteil, wenn die Palettenaufnahme um eine gestellfeste Achse schwenkbar ist, die sich parallel zur Schwerpunktachse der mit dem Palettenstapel beladenen Palettenaufnahme erstreckt. Durch die im Wesentlichen parallel versetzte Anordnung der Drehachse zur Schwerpunktachse lässt sich die mit einem Palettenstapel vollständig beladene Palettenaufnahme mit nur geringem Kraftaufwand in die Entnahmestellung schwenken. Wenn die Schwerpunktachse in beiden Endstellungen zwischen dem Bediener und der Drehachse liegt, werden ungewollte Schwenkbewegungen vermieden, d.h. die Palettenaufnahme beginnt nicht von selbst zu schwenken, sondern nur dann, wenn der Bediener zumindest eine gewisse Kraft auf die Palettenaufnahme ausübt.

Eine weitere Ausgestaltung sieht vor, dass die Palettenaufahme aus einem ersten Schenkel, an dem die Transportpaletten mit einer ihrer Schmalseiten anliegen, und einem hierzu rechtwinkligen zweiten Schenkel, an dem die unterste Transportpalette eines aus mehreren Transportpaletten zusammengesetzten Palettenstapels flach anliegt, zusammengesetzt sind. Mit Hilfe einer aus zwei solchen Schenkeln zusammengesetzten Palettenaufnahme lässt sich das Stapeln der Paletten besonders kräfteschonend durchführen. Hierzu werden in einem ersten Verfahrensschritt die einzelnen Paletten zunächst so abgesetzt, dass sie sich mit ihrem einen Rand auf dem Boden, und mit dem anderen Rand auf dem ersten Schenkel der Palettenaufnahme abstützen. Sodann wird die Palette an ihrem noch auf dem Boden aufliegenden Rand ergriffen, angehoben und gleichzeitig in einer Schwenkbewegung in die Palettenaufnahme hineinbefördert. Bei dieser Bewegung schwenkt die Palette um ihren anderen, sich bereits auf dem ersten Schenkel abstützenden Rand. Infolge dieser Schwenkbewegung muss von dem Mitarbeiter nicht das gesamte Gewicht der jeweiligen Palette angehoben werden, sondern nur etwa die Hälfte dieses Gewichts. Zudem ist eine Ausrichtung der Palette nicht erforderlich, da sie sich mit ihrem einen Rand bereits auf dem ersten Schenkel der Palettenaufnahme abstützt, und sie insoweit bereits eine eindeutig definierte und zu den anderen Paletten exakt ausgerichtete Lage einnimmt. Zum Ende des Aufladens legt sich die Palette, leicht schräg geneigt, gegen den zweiten Schenkel der Palettenaufnahme oder, wenn sich dort bereits eine erste Palette befindet, gegen diese erste und damit unterste Palette.

Zur Verbesserung der mechanischen Stabilität der Palettenaufnahme wird mit einer weiteren Ausgestaltung vorgeschlagen, dass der erste und der zweite Schenkel über ein Verbindungselement miteinander verbunden sind, und die Achse an dem Verbindungselement gelagert ist. Das Verbindungselement dient zur Aussteifung der rechtwinklig zueinander verlaufenden Schenkel. Gleichzeitig dient es zur Aufnahme bzw. Lagerung der Schwenkachse.

Eine weitere Ausgestaltung sieht eine am ersten Schenkel angeordnete Querstange vor, über die die für das Verschwenken der Palettenaufnahme erforderliche Schwenkkraft von einem Bediener aufgebracht werden kann, wodurch sich die Handhabung der Vorrichtung vereinfacht.

Als teilesparend und damit in konstruktiver Hinsicht vorteilhaft hat sich eine Ausgestaltung erwiesen, bei der die aktiven und passiven Elemente der Verriegelung auf nur einer Seite der Palettenaufnahme angeordnet sind.

Im Hinblick auf eine einfache Bauweise der Vorrichtung wird weiter vorgeschlagen, dass das aktive Verriegelungselement entweder in einem Bereich des ersten Schenkels, oder einem Bereich des zweiten Schenkels oder im Bereich des von den beiden Schenkeln zur Aufnahme der Transportpaletten aufgespannten Zwischenraums angeordnet ist und dass in den jeweils übrigen Bereichen keine weiteren Verriegelungselemente vorgesehen sind. Bei dieser Ausgestaltung ist es insbesondere nicht erforderlich, Verriegelungselemente sowohl am belade- wie auch entnahmeseitigen und damit dem Bediener abgewandten und nur schwer zugänglichen Ende der Vorrichtung vorzusehen. Vielmehr reicht für die Verriegelung in sowohl der Belade- als auch Entladestellung ein einziger Verriegelungsmechanismus aus. Mehr als ein aktives Verriegelungselement ist nicht erforderlich, was eine insgesamt einfache Bauform der Vorrichtung erlaubt.

Als von besonderem Vorteil hat sich eine Ausgestaltung erwiesen, bei der das verschwenkbare Verriegelungselement im Bereich zwischen dem ersten Schenkel und der Achse angeordnet ist. Dieser Bereich befindet sich nahe dem die Palettenaufnahme verschwenkenden Bediener. Zur Betätigung des Verriegelungselementes sind demnach nur kurze Wege zwischen dem Bediener und dem Verriegelungsmechanismus zu überbrücken, weshalb sich eine wenig aufwendige Bauweise der Vorrichtung ergibt.

Schließlich wird in einer weiteren Ausgestaltung vorgeschlagen, dass das passive Verriegelungselement am Gestell angeordnet ist. Eine solche Anordnung ist insbesondere für bewegliche Gestelle, wie sie z.B. in der EP 1 557 382 A1 beschrieben sind, von Vorteil. Daneben sind natürlich auch andere ortsfeste Anordnungen z.B. durch Verschrauben am Hallenboden usw. denkbar.

Weitere Einzelheiten und Vorteile der erfindungsgemäßen Vorrichtung werden nachfolgend unter Zuhilfenahme der beigefügten Zeichnungen erläutert, in denen
- Fign. 1a - 1c: verschiedene Ansichten einer erfindungsgemäßen Vorrichtung in der Beladestellung,
- Fign. 2a - 2c: verschiedene Ansichten der Vorrichtung aus den Fign. 1a bis 1c in der Entnahmestellung,
- Fig. 3: eine vergrößerte Detaildarstellung gemäß der Einzelheit III in Fig. 2a,
- Fig. 4: eine vergrößerte Detaildarstellung gemäß der Einzelheit IV in Fig. 2c und
- Fign. 5 - 12: verschiedene Stadien bei der Handhabung der erfindungsgemäßen Vorrichtung in einer Seitenansicht
zeigen.

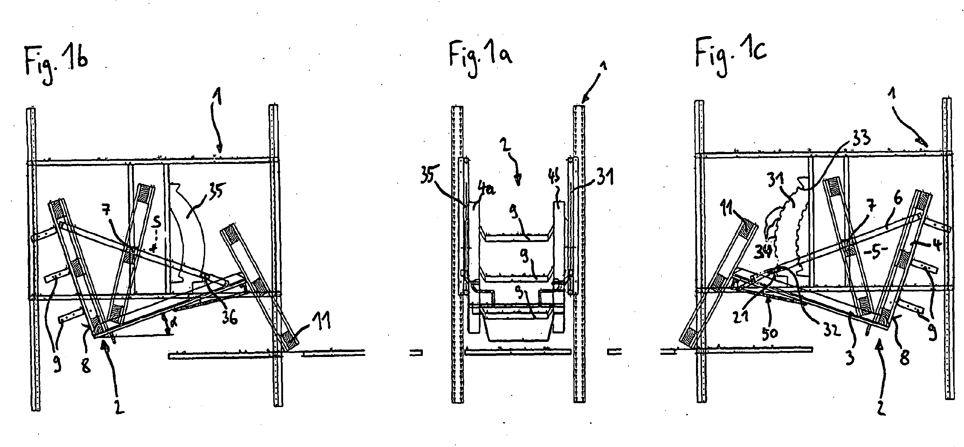

Der Aufbau einer erfindungsgemäßen Vorrichtung wird zunächst anhand der Fign. 1a - 1c, in denen Fig. 1a eine Frontansicht, Fig. 1c eine Seitenansicht von der aus in Fig. 1a betrachtet rechten Seite her und Fig. 1b eine Seitenansicht aus der in Fig. 1a von links her betrachteten Seite zeigt.

Die Vorrichtung besteht in erster Linie aus einem Gestell 1 und einer darin schwenkbar angeordneten Palettenaufnahme 2. Bei dem im Ausführungsbeispiel dargestellten Gestell 1 handelt es sich um ein ortsfestes Gestellmodul, das in verschiedenste Lagerregalsysteme integrierbar ist. Die Erfindung beschränkt sich aber nicht auf solche Gestelle, sondern ist gleichermaßen auch bei verfahrbaren Gestellen, deren Einzelheiten z.B. in der EP 1 557 382 A2 beschrieben sind, anwendbar. Die Palettenaufnahme 2 setzt sich zusammen aus einem ersten Schenkel 3 und einem zweiten Schenkel 4, die einen rechten Winkel zueinander bilden und einen Zwischenraum 5 zur Aufnahme von Paletten 11 aufspannen, z.B. für sog. Euro-Paletten. Die Schenkel 3, 4 sind im Bereich des rechten Winkels starr miteinander verbunden und außerdem über ein Verbindungselement 6 versteift. In etwa in der Mitte des Verbindungselementes 6 befindet sich eine Achse 7, über die die Palettenaufnahme 2 als Ganzes verschwenkbar in dem Gestell 1 aufgehängt ist. Ist die Palettenaufnahme 2 in ihrer Beladestellung vollständig mit Paletten 11 beladen, so befindet sich die gemeinsame Schwerpunktachse S der mit dem Palettenstapel 18 gefüllten Palettenaufnahme 2 zwischen der Achse 7 und dem Bediener.

In den Fign. 1a bis 1c ist die Palettenaufnahme 2 in ihrer ersten Endstellung, d.h. der Beladestellung, dargestellt. In dieser Endstellung weist der erste Schenkel 3 eine geringe Neigung mit einem Neigungswinkel α zur Horizontalen auf. Der Neigungswinkel α beträgt vorzugsweise zwischen 5° und 15°. An der Unterseite 8 des zweiten Schenkels 4 sind beim Ausführungsbeispiel insgesamt drei Bügel 9 vorgesehen, die einen linken Holm 4a des Schenkels 4 mit dessen rechtem Holm 4b verbinden und die Palettenaufnahme 2 damit versteifen.

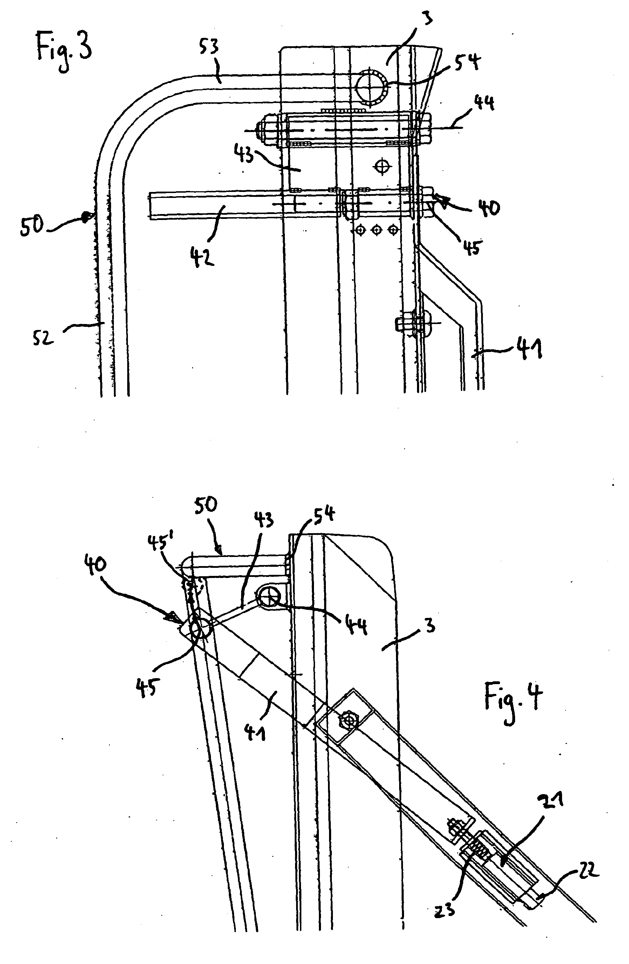

Am ersten Schenkel 3 ist ein Griff 50 mit einer Querstange 53 (vgl. Fig. 3) vorgesehen, an welcher der Bediener die Palettenaufnahme 2 greifen und verschwenken kann. Darüber hinaus lässt die Darstellung in Fig. 1c ein ortsfestes Verriegelungselement 31 erkennen. Dieses ist beim Ausführungsbeispiel nach Art eines Kreisringsegments gestaltet und an seinem unteren Ende mit einer ersten Verriegelungsstruktur 32 zur Verriegelung in der dargestellten Beladeposition und am oberen Ende mit einer weiteren Verriegelungsstruktur 33 zur Verriegelung der Palettenaufnahme 2 in der Entnahmestellung versehen. Das ortsfeste Verriegelungselement 31 verfügt darüber hinaus zwischen der ersten 32 und der zweiten 33 Verriegelungsstruktur über eine Vielzahl von Zwischenverriegelungsstrukturen 34, auf deren Funktionen später noch im Detail eingegangen wird. Das ortsfeste Verriegelungselement 31 ist an dem Gestell 1 z.B. durch Schweißen oder Verschrauben ortsfest montiert und bildet den passiven Teil der Verriegelung. Es befindet sich seitlich der Palettenaufnahme 2, wobei nur die in Fig. 1a rechte Seite der Vorrichtung mit dem ortsfesten Verriegelungselement 31 versehen ist. Auf der gegenüberliegenden Seite befindet sich links ein Anschlagelement 35, welches in seiner Außengeometrie dem Verriegelungselement 31 zwar ähnlich ist, jedoch nicht mit den Verriegelungsstrukturen 32, 33, 34 versehen ist. Das Anschlagelement 35 ist nicht zu Verriegelungszwecken vorgesehen. Die Funktion des Anschlagelementes 35 beschränkt sich vielmehr im Zusammenspiel mit einem an der Palettenaufnahme 2 angeordneten Anschlagelement 36 darauf, die Schwenkbewegungen der Palettenaufnahme 2 in beiden Richtungen nach Art eines Endanschlags zu begrenzen, wodurch die Ableitung der Kräfte in den Endstellungen symmetrisch über beide Seiten der Palettenaufnahme 2 erfolgt. Denkbar wäre es zwar auch, einen zweiten Verriegelungsmechanismus vorzusehen, jedoch hat sich eine einseitige Verriegelung, d.h. eine Verriegelung mit nur einem einzigen Verriegelungsmechanismus auf nur einer Seite des drehbaren Palettenaufnahme 2, als teilesparend erwiesen.

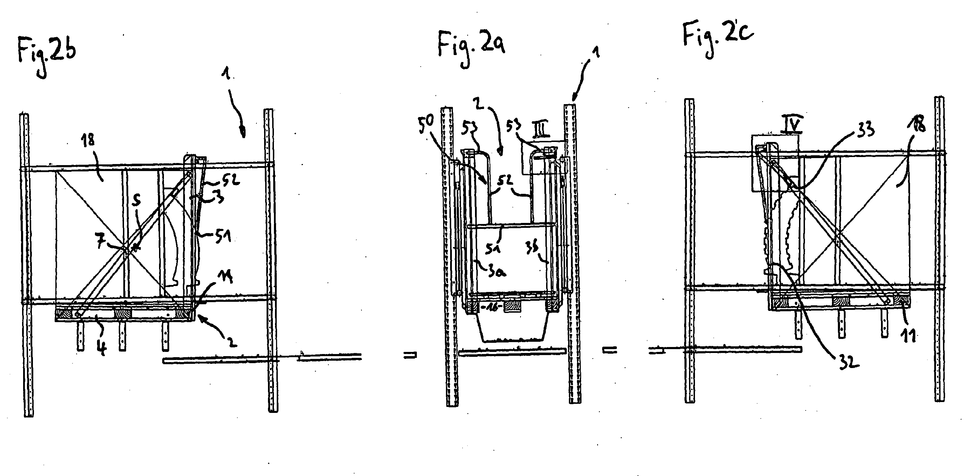

Die Fign. 2a bis 2c zeigen die Palettenaufnahme 2 in ihrer zweiten Endstellung, d.h. der Entnahmestellung. In dieser Stellung ist die Palettenaufnahme 2 mit einem aus einer Vielzahl von Paletten 11 zusammengesetzten Palettenstapel 18 befüllt, der in den Fign. 2a bis 2c nur stark schematisiert dargestellt ist. Die unterste Palette 11 liegt flach an dem zweiten Schenkel 4 der Palettenaufnahme 2 an, die übrigen Paletten liegen mit einer ihrer Schmalseiten an dem ersten Schenkel 3 an. Auch in dieser Stellung verläuft die Schwerpunktachse S der mit dem Palettenstapel 18 beladenen Palettenaufnahme 2 parallel zur Drehachse 7 und befindet sich auf der Bedienerseite der Drehachse 7, vgl. Fig. 2b. In dieser Stellung kann der Palettenstapel 18 von z.B. einem Gabelstapler oder ähnlichen Lagerbediengeräten aus der Vorrichtung entnommen werden, wozu der zweite Schenkel 4 mit einer nach außen offenen Entnahmeöffnung 16 zwischen seinen Holmen 4a und 4b versehen ist, in die zum Beispiel die Gabel eines Gabelstaplers und die unterste Palette von unten kommend untergreifen kann.

In Fig. 2a gut erkennen lässt sich die Gestaltung des Griffs 50. Dieser ist zusammengesetzt aus einer die beiden Holme 3a, 3b des ersten Schenkels 3 verbindenden Querstrebe 51 und sich an diese anschließende, durch mehrfaches Biegen geformte Stangen 52, deren untere Enden mit der Querstrebe 51 verschweißt sind und deren obere Enden nach außen hin mehrfach abgewinkelte Griffteile bzw. Querstangen 53 aufweisen.

Einzelheiten der Griffe 50 sowie des verschwenkbaren Verriegelungselements 21 lassen sich besser den Fign. 3 und 4 entnehmen, die vergrößerte Detailansichten der in Fig. 2a bzw. 2c bezeichneten Einzelheiten sind. In Fig. 3 dargestellt ist im linken Bereich die in der Entnahmeposition der Vorrichtung im Wesentlichen senkrecht verlaufende Stange 52 des Griffs 50. Im oberen Endbereich ist die Stange 52 um in etwa 90° nach außen weisend zu einer Querstange 53 geformt. Am außenseitigen Ende der als Griffteil dienenden Querstange 53 findet sich eine weitere Abwinklung, die, wie Fig. 4 dies insbesondere erkennen lässt, in Richtung auf den ersten Schenkel 3 hin gebogen und über eine Schweißstelle 54 mit diesem verbunden ist. Zum Verschwenken der Palettenaufnahme 3 ergreift der Bediener die Palettenaufnahme 2 an den beidseitig symmetrisch angeordneten Querstangen 53, und kann so die zum Verschwenken erforderliche Schwenkkraft aufbringen.

Um allerdings die Palettenaufnahme 2 aus einer der Endstellungen verschwenken zu können, ist es zunächst erforderlich, dass das aktiv arbeitende Verriegelungselement 21 betätigt und so die Verriegelung mit dem ortsfesten Verriegelungselement 31 gelöst wird. Hierzu ist die Vorrichtung mit einem Betätigungselement 40 versehen, dessen Einzelheiten in Fig. 4 dargestellt sind. Das Bestätigungselement 40 ist im Bereich des ersten Schenkels 3, nahe dem Verriegelungselement 21 angeordnet, so dass sich ein insgesamt einfacher Aufbau der Vorrichtung ergibt. Es besteht aus einem Zugelement 41, das mit dem über eine Feder 23 belasteten Rastelement 22 gekoppelt ist. Am oberen Ende des Zugelementes 41 ist ein Griffteil 42 (vgl. Fig. 3) vorgesehen, welches über eine Strebe 43 mit einem Gelenk 44 nach Art eines doppelten Gelenkes 44, 45 verbunden ist. In Fig. 3 lässt sich die Anordnung des Griffteils 42 des Betätigungselementes 40 sowie des Griffteils 53 des Griffs 50 erkennen. Beide Griffteile 42, 53 sind im Wesentlichen parallel zueinander ausgerichtet, so dass der Bediener die Palettenaufnahme 2 am Griffteil 53 nach Art eines Fahrradlenkers greifen, und das Betätigungselement 40 über das Griffteil 42 nach Art einer Fahrradbremse betätigen kann. Hierzu legt er die Innenhandfläche auf dem Griffteil 53 ab und umschließt das Griffteil 42 des Betätigungselementes 40 mit den Fingern der rechten Hand. Durch Aufeinanderzuziehen der beiden Griffteile 42, 53 nimmt die Drehachse 45 die in Fig. 4 gestrichelt dargestellte Position 45' direkt unterhalb des Griffteils 53 ein. In dieser Position liegen die beiden Griffteile 53, 42 nahe beieinander, so dass der Bediener beide gemeinsam umgreifen und die Palettenaufnahme 2 von einer der Endpositionen leicht in Richtung der anderen verschwenken kann. Am Ende des Schwenkvorganges löst er den von seiner Hand gebildeten Übergriff über die beiden Griffteile 42 und 53, so dass das Zugelement 41 durch die Kraft der Druckfeder 23 in seine Ausgangslage zurückgezogen und der Bolzen 22 des aktiven Verriegelungselementes 21 wieder mit den korrespondierenden Verriegelungsstrukturen 32, 33 des ortsfesten, passiven Verriegelungselementes 31 in Eingriff gelangt.

Sollte es z.B. im Falle eines Notfalls einmal erforderlich sein, den Schwenkvorgang zu unterbrechen, so ist es dem Bediener jederzeit möglich, den Übergriff über die beiden parallelen Griffteile 42 und 53 zu lösen, so dass dann der Bolzen 22 des federbelasteten Verriegelungselementes 21 in seine untere Position federt und eine Verriegelung gegenüber der nächstgelegenen Zwischenverriegelungsstruktur 34 herstellt. Das passive Verriegelungselement 31 ist hierzu mit einer Vielzahl von Zwischenverriegelungsstrukturen 34 versehen, so dass eine Verriegelung z.B. mit Schwenkintervallen der Palettenaufnahme 2 von 5° möglich ist, d.h. der Abstand zwischen den Zwischenverriegelungsstrukturen 34 jeweils 5° beträgt. Dies erhöht die Sicherheit der Vorrichtung.

Beim Ausführungsbeispiel ist das aktive Verriegelungselement 21 in dem von den beiden Schenkeln 3, 4 der Palettenaufnahme 2 für den Palettenstapel 18 aufgespannten Bereich zwischen dem ersten Schenkel 3 und der Achse 7 angeordnet. Daneben wäre auch eine Anordnung am ersten oder zweiten Schenkel möglich. Für die Verriegelung hat sich ein aktives Verriegelungselement 21 in einem dieser Bereiche als funktionell ausreichend erwiesen, so dass weitere aktive Verriegelungselemente 21 nicht erforderlich sind.

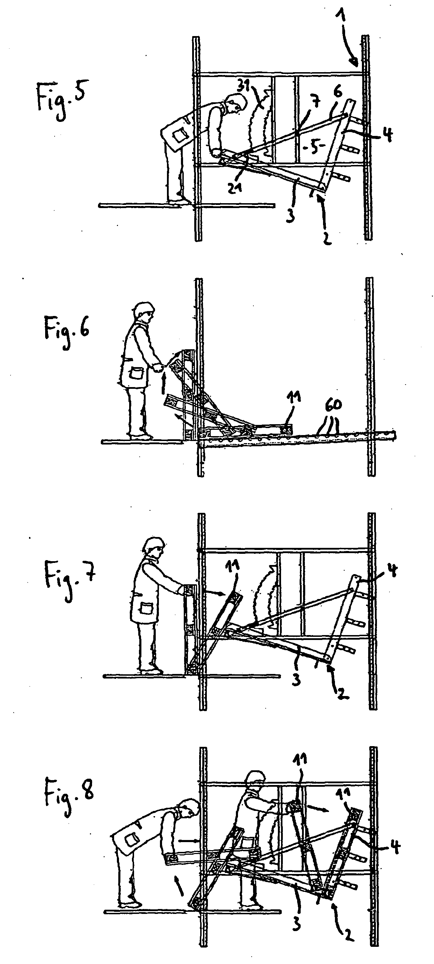

Nachfolgend werden anhand der Fign. 5 bis 12 die einzelnen Verfahrensschritte beim Stapeln eines aus mehreren Transportpaletten 11 zusammengesetzten Palettenstapels 18 erläutert.

In Fig. 5 dargestellt ist ein Lagerarbeiter, der die Palettenaufnahme 2 soeben in ihre Beladestellung verschwenkt und dort durch Verrasten der Verriegelungselemente 21 und 31 verriegelt hat. Der Bolzen 22 des verschwenkbaren Verriegelungselements 21 greift in dieser Stellung in die untere Verriegelungsstruktur 32 des Verriegelungselementes 31 ein.

Fig. 6 zeigt den Lagerarbeiter bei der Beschaffung einer Transportpalette 11, die er an ihrem vorderen Ende ergreift, wobei er die zunächst flach auf der von den Rollen 60 gebildeten Ebene liegende Palette 11 an einem Ende ergreift und in einer kombinierten Zug-HubBewegung aufrichtet, um sie anschließend der erfindungsgemäßen Stapelvorrichtung zuzurühren. In Fig. 7 dargestellt ist der Verfahrensschritt des Beladens der Vorrichtung mit mehreren Transportpaletten 11, z.B. den relativ schwergewichtigen Euro-Paletten. Die Palette 11 wird mit ihrem vorderen Rand auf den äußeren Rand des ersten Schenkels 3 aufgesetzt, wohingegen der hintere Rand der Palette 11 noch auf dem Boden aufliegt. In dieser Lage kann die Palette 11 relativ kräfteschonend gebracht werden. Sodann wird die Palette 11 an ihrem hinteren Rand angehoben (vgl. Fig. 8) und in einer Schwenkbewegung in die Palettenaufnahme 2 hineinbefördert. Dabei schwenkt die Palette 11 um ihren vorderen Rand, der bereits auf dem Schenkel 3 der Palettenaufnahme 2 aufliegt. In Fig. 8 eingezeichnet ist ein Stadium, bei dem die untere Palette 11 bereits flächig an dem zweiten Schenkel 4 anliegt. Eine weitere Palette 11 ist links daneben in einer Zwischendarstellung angedeutet, kurz bevor diese sich flächig an die darunterliegende Palette 11 anlegt. In diesem Beladestadium wird die Palettenaufnahme 2 durch die Verriegelungselemente 21, 31 in ihrer Position gesichert, bis die Palettenaufnahme 2 vollständig mit einem Palettenstapel 18 beladen ist und dann aufgrund der in Fig. 1b eingezeichneten Position der Schwerpunktachse S eine stabile Lage einnimmt. Beim Ausführungsbeispiel setzt sich ein vollständiger Palettenstapel 18 aus insgesamt neun Transportpaletten 11 zusammen.

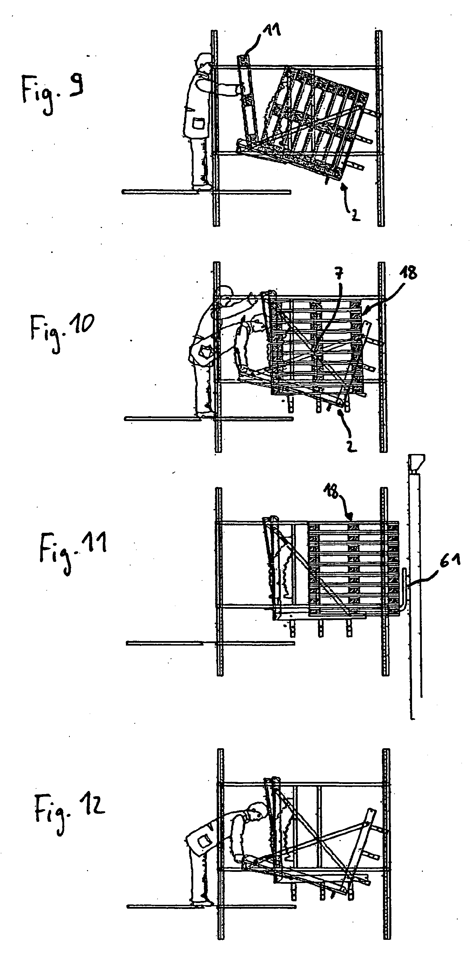

Im nächsten Schritt greift der Lagerarbeiter gemäß der Darstellung in Fig. 10 das Griffteil 53 des Griffs 50, um die beladene Palettenaufnahme 2 um die Schwenkachse 7 in ihre Entnahmestellung zu verschwenken. Vor dem Verschwenken ist es jedoch erforderlich, dass der Lagerarbeiter zunächst die Verriegelung der Verriegelungselemente 21, 31 über die Betätigungseinrichtung 40 löst, wie dies anhand der Fign. 3, 4 ausführlich erläutert wurde. Sodann kann er die Palettenaufnahme 2 durch Aufbringen einer gewissen anfänglichen Schwenkkraft in ihre Entnahmestellung verschwenken. In der Entnahmestellung kann der so zusammengesetzte Palettenstapel 18 nach erneutem Verriegeln über ein in Fig. 11 stark schematisiert dargestelltes Lagerbediengerät 61 entnommen werden. Nach Entnahme des Palettenstapels 18 greift der Lagerarbeiter die Palettenaufnahme 2 wiederum an dem dafür vorgesehenen Griffteil 53 und entriegelt über das Betätigungselement 40 die Verriegelungselemente 21 und 31, um die Palettenaufnahme 2 in die in Fig. 5 dargestellte Ausgangsstellung zurück zu schwenken.

### Bezugszeichen

- 1: Gestell
- 2: Palettenaufnahme
- 3: erster Schenkel
- 3a: linker Holm
- 3b: rechter Holm
- 4: zweiter Schenkel
- 4a: linker Holm
- 4b: rechter Holm
- 5: Zwischenraum
- 6: Verbindungselement
- 7: Achse
- 8: Unterseite
- 10: Boden
- 11: Palette
- 16: Entnahmeöffnung
- 18: Palettenstapel
- 19: Ladegabel
- 21: aktives Verriegelungselement
- 22: Rastelement, Bolzen
- 23: Feder
- 31: passives Verriegelungselement
- 32: erste Verriegelungsstruktur
- 33: zweite Verriegelungsstruktur
- 34: Zwischenverriegelungsstruktur
- 35: Anschlagelement
- 36: Anschlagelement
- 40: Betätigungselement
- 41: Zugelement
- 42: Griffteil
- 43: Strebe
- 44: Drehpunkt
- 45: Drehpunkt
- 50: Griff
- 51: Querstrebe
- 52: Stange
- 53: Querstange, Griffteil
- 54: Schweißstelle
- 66: Rolle
- 61: Lagerbediengerät
- S: Schwerpunktachse

## Patentansprüche

1. Vorrichtung zum Stapeln leerer Transportpaletten (11) mit einer in einem Gestell (1) drehbar gelagerten Palettenaufnahme (2), die zwischen einer Belade- und einer Entnahmestellung verschwenkbar ist, und mit aktiven und passiven Verriegelungselementen (21, 31) zur lösbaren Verriegelung der Palettenaufnahme (2) in der Belade- und der Entnahmestellung, wobei das aktive, zum Lösen der Verriegelung betätigbare Verriegelungselement (21) an der drehbaren Palettenaufnahme (2) angeordnet und gemeinsam mit dieser verschwenkbar ist, und das passive Verriegelungselement (31) drehfest gegenüber dem Gestell (1) ist und eine erste (32) und eine zweite (33) Verriegelungsstruktur aufweist.
**dadurch gekennzeichnet,**
**dass** das passive Verriegelungselement (31) Zwischenverriegelungsstrukturen (34) zwischen der ersten (32) und der zweiten (33) Verriegelungsstruktur aufweist, und dass das aktive Verriegelungselement (21) federbelastet an den Verriegelungsstrukturen (32, 33) und Zwischenverriegelungsstrukturen (34) verriegelbar ist.

2. Vorrichtung nach Anspruch 1, **dadurch gekennzeichnet, dass** die von den Verriegelungselementen (21, 31) gebildete Verriegelung über ein mit dem aktiven Verriegelungselement (21) gekoppeltes Betätigungselement (40) lösbar ist.

3. Vorrichtung nach Anspruch 2, **dadurch gekennzeichnet, dass** das Betätigungselement (40) ein mit dem aktiven Verriegelungselement (21) gekoppeltes Griffteil (42) aufweist.

4. Vorrichtung nach Anspruch 3, **dadurch gekennzeichnet, dass** das Griffteil (42) gemeinsam mit einer Querstange (53) greifbar ist, die starr an der Palettenaufnahme (2) befestigt ist.

5. Vorrichtung nach Anspruch 4, **dadurch gekennzeichnet, dass** das Griffteil (42) unter Fingerdruck gegen die Querstange (53) ziehbar ist.

6. Vorrichtung nach einem der vorangehenden Ansprüche, **dadurch gekennzeichnet, dass** die Palettenaufnahme (2) um eine gestellfeste Achse (7) schwenkbar ist, die sich parallel zur Schwerpunktachse (S) der mit einem Palettenstapel (18) beladenen Palettenaufnahme (2) erstreckt.

7. Vorrichtung nach Anspruch 1 und/oder Anspruch 6, **dadurch gekennzeichnet, dass** die Palettenaufnahme aus einem ersten Schenkel (3), an dem die Transportpaletten (11) mit einer ihrer Schmalseiten anliegen, und einem hierzu rechtwinkligen zweiten Schenkel (4), an dem die unterste Transportpalette (11) eines aus mehreren Transportpaletten (11) zusammengesetzten Palettenstapels (18) flach anliegt, zusammengesetzt ist.

8. Vorrichtung nach Anspruch 7, **dadurch gekennzeichnet, dass** der erste (3) und der zweite (4) Schenkel über ein Verbindungselement (6) miteinander verbunden sind, und die Achse (7) an dem Verbindungselement (7) gelagert ist.

9. Vorrichtung nach Anspruch 7, **gekennzeichnet durch** eine am ersten Schenkel (3) angeordnete Querstange (53), über die die für das Verschwenken der Palettenaufnahme (2) erforderliche Schwenkkraft von einem Bediener aufgebracht werden kann.

10. Vorrichtung nach einem der vorhergehenden Ansprüche, **dadurch gekennzeichnet, dass** die aktiven (21) und passiven (31) Elemente der Verriegelung auf nur einer Seite der Palettenaufnahme (2) angeordnet sind.

11. Vorrichtung nach einem der vorhergehenden Ansprüche, **dadurch gekennzeichnet, dass** das aktive Verriegelungselement (21) entweder in einem Bereich des ersten Schenkels (3), oder einem Bereich des zweiten Schenkels (4) oder im Bereich des von den beiden Schenkeln (3, 4) zur Aufnahme der Transportpaletten (11) aufgespannten Zwischenraums (5) angeordnet ist und dass in den jeweils übrigen Bereichen keine weiteren Verriegelungselemente an der Palettenaufnahme (2) vorgesehen sind.

12. Vorrichtung nach Anspruch 11, **dadurch gekennzeichnet, dass** das verschwenkbare Verriegelungselement (21) im Bereich zwischen dem ersten Schenkel (3) und der Achse (7) angeordnet ist.

13. Vorrichtung nach einem der vorhergehenden Ansprüche, **dadurch gekennzeichnet, dass** das passive Verriegelungselement (31) am Gestell (1) angeordnet ist.

## Claims

1. Apparatus for stacking empty transport pallets (11), comprising a pallet holder (2) which is rotatably mounted in a frame (1) and which can pivot between a loading position and a removal position, and comprising active and passive locking elements (21, 31) for releasably locking the pallet holder (2) in the loading position and removal position, wherein the active locking element (21) which can be actuated in order to release the lock is arranged on the rotatable pallet holder (2) and can pivot together with the latter, and the passive locking element (31) is rotationally fixed relative to the frame (1) and has a first (32) and a second (33) locking structure, **characterised in that** the passive locking element (31) has intermediate locking structures (34) between the first (32) and the second (33) locking structure, and **in that** the active locking element (21) can be locked onto the locking structures (32, 33) and the intermediate locking structures (34) in a spring-loaded manner.

2. Apparatus according to claim 1, **characterised in that** the lock formed by the locking elements (21, 31) can be released via an actuation element (40) which is coupled to the active locking element (21).

3. Apparatus according to claim 2, **characterised in that** the actuation element (40) comprises a handle part (42) which is coupled to the active locking element (21).

4. Apparatus according to claim 3, **characterised in that** the handle part (42) can be gripped together with a transverse rod (53) which is rigidly attached to the pallet holder (2).

5. Apparatus according to claim 4, **characterised in that** the handle part (42) can be pulled towards the transverse rod (53) under finger pressure.

6. Apparatus according to one of the preceding claims, **characterised in that** the pallet holder (2) can pivot about an axle (7) which is fixed to the frame and which extends parallel to the centroidal axis (S) of the pallet holder (2) loaded with a pallet stack (18).

7. Apparatus according to claim 1 and/or claim 6, **characterised in that** the pallet holder is composed of a first leg (3), against which the transport pallets (11) bear with one of their narrow sides, and a second leg (4) which is arranged at right angles thereto and against which the lowermost transport pallet (11) of a pallet stack (18) composed of a plurality of transport pallets (11) bears in a flat manner.

8. Apparatus according to claim 7, **characterised in that** the first (3) and the second (4) legs are connected to one another via a connecting element (6), and the axle (7) is mounted on the connecting element (6).

9. Apparatus according to claim 7, **characterised by** a transverse rod (53) which is arranged on the first leg (3) and via which the pivoting force required in order to pivot the pallet holder (2) can be applied by an operator.

10. Apparatus according to one of the preceding claims, **characterised in that** the active (21) and passive (31) elements of the lock are arranged on just one side of the pallet holder (2).

11. Apparatus according to one of the preceding claims, **characterised in that** the active locking element (21) is arranged either in a region of the first leg (3) or in a region of the second leg (4) or in the region of the intermediate space (5) defined by the two legs (3, 4) in order to hold the transport pallets (11), and **in that** no further locking elements are provided on the pallet holder (2) in the respective other regions.

12. Apparatus according to claim 11, **characterised in that** the pivotable locking element (21) is arranged in the region between the first leg (3) and the axle (7).

13. Apparatus according to one of the preceding claims, **characterised in that** the passive locking element (31) is arranged on the frame (1).

## Revendications

1. Dispositif d'empilement de palettes de transport (11) vides avec un réceptacle de palette (2) monté rotatif dans un bâti (1), qui peut être pivoté entre une position de chargement et une position de retrait, et avec des éléments de verrouillage (21, 31) actifs et passifs pour le verrouillage détachable du réceptacle de palette (2) dans la position de chargement et la position de retrait, l'élément de verrouillage (21) actif, actionnable pour desserrer le verrouillage étant disposé sur le réceptacle de palette (2) rotatif et pouvant être pivoté conjointement avec celui-ci, et l'élément de verrouillage (31) passif étant bloqué en rotation par rapport au bâti (1) et présentant une première (32) et une seconde (33) structures de verrouillage, **caractérisé en ce que** l'élément de verrouillage (31) passif présente des structures de verrouillage intermédiaire (34) entre la première (32) et la seconde (33) structures de verrouillage, et **en ce que** l'élément de verrouillage (21) actif peut être verrouillé de manière sollicitée par ressort sur les structures de verrouillage (32, 33) et les structures de verrouillage intermédiaire (34).

2. Dispositif selon la revendication 1, **caractérisé en ce que** le verrouillage formé par les éléments de verrouillage (21, 31) peut être détaché par un élément d'actionnement (40) couplé à l'élément de verrouillage (21) actif.

3. Dispositif selon la revendication 2, **caractérisé en ce que** l'élément d'actionnement (40) présente une partie de préhension (42) couplée à l'élément de verrouillage (21) actif.

4. Dispositif selon la revendication 3, **caractérisé en ce que** la partie de préhension (42) peut être saisie conjointement avec une traverse (53) qui est fixée rigidement sur le réceptacle de palette (2).

5. Dispositif selon la revendication 4, **caractérisé en ce que** la partie de préhension (42) peut être tirée sous la pression des doigts contre la traverse (53).

6. Dispositif selon l'une des revendications précédentes, **caractérisé en ce que** le réceptacle de palette (2) peut être pivoté autour d'un axe (7) fixe par rapport au bâti, qui s'étend parallèlement à l'axe passant pare le centre de gravité (S) du réceptacle de palette (2) chargé avec un empilement de palettes (18).

7. Dispositif selon la revendication 1 et/ou la revendication 6, **caractérisé en ce que** le réceptacle de palette est composé d'une première branche (3), sur laquelle les palettes de transport (11) reposent avec l'un de leurs petits côtés, et une seconde branche (4) perpendiculaire à celle-ci, sur laquelle repose à plat la palette de transport (11) la plus basse d'un empilement de palettes (18) composé de plusieurs palettes de transport (11).

8. Dispositif selon la revendication 7, **caractérisé en ce que** la première (3) et la seconde (4) branches sont reliées entre elles par un élément de liaison (6) et **en ce que** l'axe (7) est monté sur l'élément de liaison (7).

9. Dispositif selon la revendication 7, **caractérisé par** une traverse (53) disposée sur la première branche (3), par le biais de laquelle la force de pivotement nécessaire au pivotement du réceptacle de palette (2) peut être appliquée par un utilisateur.

10. Dispositif selon l'une des revendications précédentes, **caractérisé en ce que** les éléments actifs (21) et passifs (31) du verrouillage sont disposés sur un seul côté du réceptacle de palette (2).

11. Dispositif selon l'une des revendications précédentes, **caractérisé en ce que** l'élément de verrouillage (21) actif est disposé dans une zone de la première branche (3) ou une zone de la seconde branche (4) ou dans la zone de l'espace intermédiaire (5) défini par les deux branches (3, 4) pour la réception des palettes de transport (11) et **en ce qu'**aucun autre élément de verrouillage n'est prévu sur le réceptacle de palette (2) dans les zones restantes à chaque fois.

12. Dispositif selon la revendication 11, **caractérisé en ce que** l'élément de verrouillage (21) pivotant est disposé dans la zone entre la première branche (3) et l'axe (7).

13. Dispositif selon l'une des revendications précédentes, **caractérisé en ce que** l'élément de verrouillage (31) passif est disposé sur le bâti (1).
